# EUROPÄISCHE PATENTSCHRIFT

(11) **EP 0 717 193 B1**
(45) Veröffentlichungstag und Bekanntmachung des Hinweises auf die Patenterteilung: **13.09.2000**
(21) Anmeldenummer: 95203282.9
(22) Anmeldetag: 29.11.1995
(51) Int. Cl.: F04D 25/06, H02K 17/14, H02K 17/16, H02K 7/14

(54) **Gebläseaggregat zum Erzeugen von Gasströmen**
Blower unit for raising gas flows
Unité ventilateur pour produire des courants de gaz

(30) Priorität: 09.12.1994 DE 4443844
(43) Veröffentlichungstag der Anmeldung: 19.06.1996
(73) Patentinhaber: Philips Corporate Intellectual Property GmbH, 52064 Aachen (DE); Koninklijke Philips Electronics N.V., 5621 BA Eindhoven (NL)
(72) Erfinder: Gerling, Dieter, Dr. Ing., c/o Philips, D-22335 Hamburg (DE); Lürkens, Peter, Dr. Ing., c/o Philips, D-22335 Hamburg (DE)
(74) Vertreter: Schmalz, Günther, Dipl.-Ing.

(56) Entgegenhaltungen:
- EP-A- 0 487 141
- DE-A- 2 042 356
- DE-C- 975 420
- DE-U- 9 017 166
- FR-A- 925 272
- FR-A- 1 053 700

## Beschreibung

Die Erfindung bezieht sich auf ein Gebläseaggregat zum Erzeugen von Gasströmen, insbesondere Staubsauger, gemäß dem Oberbegriff von Patentanspruch 1.

Bei heute gebräuchlichen Staubsaugern wird das Verdichterlaufrad über eine Welle von einem separaten Antriebsmotor, der meistens als Universalmotor ausgebildet ist, angetrieben. Dieser Aufbau hat den Nachteil, daß er ein großes Einbauvolumen beansprucht und außerdem aufgrund der notwendigen Bürsten in der maximal zulässigen Drehzahl begrenzt ist.

Aus der EP-A-0 487 141 ist ein Gebläseaggregat mit einem Axialfluß-Induktionsmotor bekannt, bei dem das Verdichterlaufrad gleichzeitig elektromagnetisch wirksam ist und zusammen mit elektromagnetisch aktiven Teilen des Motorständers das Drehmoment des Verdichterlaufrades über einen zwischen Radialflächen des Verdichterlaufiades und des Motorständers gebildeten Luftspalt erzeugt. Dabei ist vorgesehen, daß der Motor mittels eines Frequenzumrichters gespeist wird und die Drehzahlstellung von prozeßabhängigen Sollwerten und einstellbaren Stellgrößen abgeleitet wird. Der Aufbau Nach Art eines Axialflußmotors hat folgende Nachteile:
- Die maximale Leistung ist bei durch das Verdichterlaufrad vorgegebenem Durchmesser begrenzt;
- die drehenden Motorteile werden bei Zerstörung nicht von einem umgebenen Motorstator aufgefangen, und
- die Lager werden durch zusätzliche magnetische Axialkräfte belastet.

Aus der Schrift FR-A-1 053 700 ist ein Rotor für einen Induktionsmotor bekannt, der aus zwei offenen Konzentrischen Zylindern besteht.

Es ist Aufgabe der Erfindung, ein Gebläseaggregat zu schaffen, das weniger Einbauvolumen und höhere Drehzahlen als bisher gebräuchliche Aggregate erreichen kann, dessen maximale Leistung nicht vom vorgegebenen Durchmesser begrenzt wird, keine magnetischen Axialkräfte besitzt und dessen Verhalten bei Zerstörung des Rotors des Antriebsmotors nicht zur Gefährdung des Nutzers führen kann.

Die gestellte Aufgabe wird durch die in Anspruch 1 angegebenen Merkmale gelöst.

Nach einer weiteren Ausgestaltung der Erfindung ist vorgesehen, daß der Motor mittels eines Frequenzumrichters gespeist wird und die Drehzahlstellung von prozeßabhängigen Sollwerten und einstellbaren Stellgrößen abgeleitet wird.

Durch den beschriebenen Aufbau erhält man ein kompaktes Aggregat, das zudem keine Drehzahlbeschränkung aufgrund von Bürsten besitzt. Die maximale Leistung ist durch eine axiale Verlängerung des Motorteils vergrößerbar, und bei Zerstörung der drehenden Motorteile wirkt der umgebende Motorstator als Schutz. Außerdem erzeugt der Radialflußmotor keine magnetischen Axialkräfte.

Infolge der Speisung des Motors mittels eines Frequenzumrichters und der Ableitung der Drehzahlstellung von prozeßabhängigen Sollwerten und einstellbaren Stellgrößen ist es möglich, die Arbeitsdrehzahl des Motors auf 25.000 bis 50.000 U/min zu erhöhen. Die hohe Arbeitsdrehzahl bietet die Möglichkeit, den Turbinenwirkungsgrad zu steigern. Die Stellmöglichkeiten erlauben es, die Saugleistung optimal dem Bedarf anpassen zu können. Darüber hinaus kann mittels zusätzlicher Drucksensoren eine Regelung realisiert werden.

Nach einer weiteren Ausgestaltung der Erfindung ist vorgesehen, daß wenigstens einer der beiden Zylinder an einem seiner axialen Enden nahezu völlig geschlossen und dieses geschlossene Ende an einer axialen Begrenzungsfläche des Verdichterlaufrades angeordnet ist. Damit wird die Stabilität des Rotors weiter erhöht.

In weiterer Ausgestaltung der Erfindung ist vorgesehen, daß der flächige Kontakt zwischen dem Motorrotor und dem Verdichterlaufrad von der Basisplatte des Verdichterlaufrades gebildet wird. Hierdurch erreicht man eine noch höhere Integration von Antriebsmotor und Verdichterlaufrad.

Nach einer weiteren Ausgestaltung der Erfindung ist vorgesehen, daß das elektrisch gut leitende Material des äußeren Rotorzylinders Aluminium ist. Die Zylindermasse wird dadurch verringert.

Nach einer weiteren Ausgestaltung der Erfindung ist vorgesehen, daß das magnetisch gut leitende Material des inneren Rotorzylinders massives Eisen ist. Dies ist der wirtschaftlichste Aufbau eines magnetisch leitfähigen Zylinders.

In einer weiteren Ausgestaltung der Erfindung ist vorgesehen, daß der innenliegende Zylinder aus einem Material mit hoher magnetischer Leitfähigkeit entweder aus axial geschichteten Blechen oder aus einem gewickelten Elektroblechband besteht. Hierdurch werden Wirbelströme in dem magnetisch leitfähigen Zylinder unterdrückt, was die Leistungsfähigkeit des Motors verbessert.

In einer weiteren Ausgestaltung der Erfindung ist vorgesehen, daß die beiden Rotorzylinder eine ungleiche axiale Ausdehnung aufweisen, wobei vorzugsweise der elektrisch leitfähige Zylinder eine größere axiale Ausdehnung aufweist als der magnetisch leitfähige Zylinder. Dies hat den Vorteil, daß der Rotorwiderstand verringert wird, wodurch die Motoreigenschaften positiv beeinflußt werden.

In einer weiteren Ausgestaltung der Erfindung ist vorgesehen, daß der magnetisch leitfähige Zylinder zumindest teilweise von dem elektrisch leitfähigen Material umgeben ist.

Nach einer weiteren Ausgestaltung der Erfindung ist vorgesehen, daß die Stellgrößen die Primärfrequenz und der Statorstrom oder die Statorspannung sind. Ebenso ist nach einer weiteren Ausgestaltung vorgesehen, daß der Drehzahl-Istwert eine Meßgröße ist oder aus elektrischen Größen des Motors ermittelt wird. Durch eine derartige Auswertung der Funktionsabläufe innerhalb des Radialfluß-Induktionsmotors kann auf mechanische oder elektrische Fühler verzichtet werden.

Die Erfindung wird anhand der Zeichnungen näher erläutert. Es zeigen:
Fig. 1 ein Schnittbild durch das Gebläseaggregat und
Fig. 2 ein Blockschaltbild der Speisung und Steuerung des Radialfluß-Induktionsmotors in dem Gebläseaggregat nach Fig. 1.

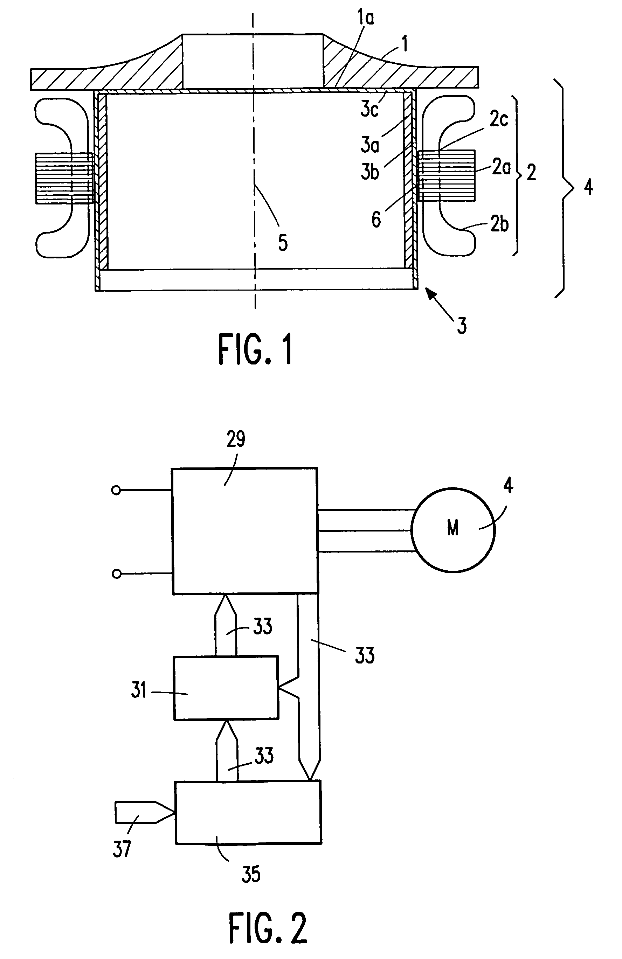

Das in Fig. 1 in einem Schnittbild dargestellte Gebläseaggregat besteht aus einem Verdichterlaufrad 1 mit einer Basisplatte la und einem Radialfluß-Induktionsmotor 4 mit einem Stator 2 und einem durch einen Luftspalt 6 vom Stator 4 getrennten Rotor 3. Der Stator 2 besteht aus einem Ständerblechpaket 2a und der Statorwicklung 2b. Der Rotor 3 besteht aus einem magnetisch leitfähigen Zylinder 3a, einem mit dem Zylinder 3a verbundenen, elektrisch leitfähigen Zylinder 3b und einer den Rotor 3 an einem axialen Ende 3d axial begrenzenden Platte 3c. Bei dem dargestellten Radialfluß-Innenläufer-Induktionsmotor ist der Stator konventionell aufgebaut, d.h. in ein lamelliertes Blechpaket mit Nuten 2c in die Nuten 2c Spulen 2b eingelegt. Der Rotor 3, der vom Stator 2 durch einen Luftspalt 6 getrennt ist, besteht aus den zwei konzentrischen Zylindern 3a und 3b. Der äußere Zylinder 3b, der dem Luftspalt zugewandt ist, besteht aus einem Material mit hoher elektrischer Leitfähigkeit, wie z.B. Aluminium. Der innenliegende Zylinder 3a besteht aus einem Material mit hoher magnetischer Leitfähigkeit, wie z.B. Eisen: er kann aus massivem Eisen, aus lamelliertem Eisen oder aus gewickeltem Eisen bestehen. Der äußere Zylinder 3b hat eine größere axiale Länge als der innere Zylinder 3a.

Bei dem Ausführungsbeispiel nach Fig. 1 ist das Verdichterlaufrad 1 in einer nicht gezeigten Weise auf der den Rotor axial begrenzenden Basisplatte 3c befestigt. Das Verdichterlaufrad 1 kann aber auch eine eigene metallische Begrenzungswand 1a haben, die mit der Basisplatte 3c verbunden ist. Ebenso in einer nicht gezeigten Weise sind der Läufer 2 und das Verdichterlaufrad 1 gemeinsam um eine Achse 5 drehbar gelagert.

Fig. 2 zeigt eine Steuerung für den Radialfluß-Induktionsmotor 4 nach Fig. 1. Es ist ein Frequenzumrichter 29 vorgesehen, der die Wicklung des Motors 4 speist. Die Drehzahlstellung wird dabei von prozeßabhängigen Sollwerten und einstellbaren Stellgrößen abgeleitet. Es ist ein Signalformer 31 vorgesehen, der Stell- oder Istgrößen in Form der Primärfrequnez sowie des Statorstromes oder der Statorspannung über Leitungen 33 zugeführt erhält.

Weiterhin ist es möglich, eine Drehzahlstellung und/oder eine Leistungsstellung von prozeßabhängigen Sollwerten und Stellgrößen abzuleiten. Im Prozeßregler 35 können Istwerte, z.B. für Drehzahl und Saugleistung, aus elektrischen Größen ermittelt werden. Der Drehzahl-Sollwert kann am Prozeßregler 35 beispielsweise mittels eines von Hand bedienbaren Stellgliedes 37 vorgegeben werden; auch kann er von einem Prozeßsensor abgeleitet werden.

## Patentansprüche

1. Gebläseaggregat zum Erzeugen von Gasströmen, insbesondere für Staubsauger, mit einem Verdichterlaufrad (1) und einem Motor (4),
der ein Radialfluß-Induktionsmotor mit außenliegendem Stator (2) und innenliegendem Rotor (3) ist, wobei der Stator (2) aus einem Blechpaket (2a) mit in Nuten eingelegten Spulen (2b) und der Rotor (3) aus zwei einteiligen, konzentrischen Zylindern (3a, 3b) besteht, von denen der äußere Zylinder (3b) aus einem elektrisch gut leitenden Material und der innere Zylinder (3a) aus einem magnetisch gut leitenden Material bestehen, wobei mindestens einer der beiden Rotorzylinder (3a, 3b) an einem seiner axialen Enden (3c) völlig geschlossen ist und an diesem Ende einen flächigen Kontakt mit dem Verdichterlaufrad (1) aufweist.

2. Gebläseaggregat nach Anspruch 1,
dadurch gekennzeichnet,
daß der Motor (4) mittels eines Frequenzumrichters (29 bis 37) gespeist wird und die Drehzahlstellung von prozeßabhängigen Sollwerten und einstellbaren Stellgrößen abgeleitet wird.

3. Gebläseaggregat nach Anspruch 1,
dadurch gekennzeichnet,
daß der flächige Kontakt zwischen dem Motorrotor (3) und dem Verdichterlaufrad (1) von der Basisplatte (la) des Verdichterlaufrades gebildet wird.

4. Gebläseaggregat nach Anspruch 1,
dadurch gekennzeichnet,
daß das elektrisch gut leitende Material des äußeren Rotorzylinders (3b) Aluminium ist.

5. Gebläseaggregat nach Anspruch 1,
dadurch gekennzeichnet,
daß das magnetisch gut leitende Material des inneren Rotorzylinders (3a) massives Eisen ist.

6. Gebläseaggregat nach Anspruch 1,
dadurch gekennzeichnet,
daß der innere Rotorzylinder (3a) aus axial geschichteten Blechen besteht.

7. Gebläseaggregat nach Anspruch 1,
dadurch gekennzeichnet,
daß der innere Rotorzylinder (3a) aus einem gewickelten Elektroblechband besteht.

8. Gebläseaggregat nach Anspruch 1,
dadurch gekennzeichnet,
daß die beiden Rotorzylinder (3a, 3b) eine ungleiche axiale Ausdehnung aufweisen, wobei vorzugsweise der elektrisch leitfähige Zylinder eine größere axiale Ausdehnung aufweist als der magnetisch leitfähige Zylinder.

9. Gebläseaggregat nach Anspruch 8,
dadurch gekennzeichnet,
daß der magnetisch leitfähige Zylinder (3a) zumindest teilweise von dem elektrisch leitfähigen Material umgeben ist.

10. Gebläseaggregat nach Anspruch 2,
dadurch gekennzeichnet,
daß die Stellgrößen die Primärfrequenz und der Statorstrom oder die Statorspannung sind.

11. Gebläseagregat nach Anspruch 10,
dadurch gekennzeichnet,
daß der Drehzahl-Istwert eine Meßgröße ist oder aus elektrischen Größen ermittelt wird.

## Claims

1. A fan unit for generating gas streams, in particular for vacuum cleaners, which unit comprises an impeller wheel (1) and a motor (4), which is a radial induction motor comprising an external stator (2) and an internal rotor (3), the stator (2) comprising a laminated core (2a) with coils (2b) arranged in slots, and the rotor (3) comprising two one-part concentric cylinders (3a, 3b), of which the outer cylinder (3b) is made of an electrically highly conductive material and the inner cylinder (3a) is made of a magnetically highly conductive material, at least one of the two rotor cylinders (3a, 3b) being wholly imperforate at one of its axial ends (3c) and being in planar contact with the impeller wheel (1) at this end.

2. A fan unit as claimed in Claim 1,
characterized in that
the motor (4) is energized by means of a frequency changer (29 to 37) and the speed setting being derived from process-dependent nominal values and adjustable set-point values.

3. A fan unit as claimed in Claim 1,
characterized in that
the planar contact between the motor rotor (3) and the impeller wheel (1) is provided by the disc portion (la) of the impeller wheel.

4. A fan unit as claimed in Claim 1,
characterized in that
the electrically highly conductive material of the outer rotor cylinder (3b) is aluminum.

5. A fan unit as claimed in Claim 1,
characterized in that
the magnetically highly conductive material of the inner rotor cylinder (3a) is solid iron.

6. A fan unit as claimed in Claim 1,
characterized in that
the inner rotor cylinder (3a) consists of axially laminated sheets.

7. A fan unit as claimed in Claim 1,
characterized in that
the inner rotor cylinder (3a) consists of a coiled electric-sheet band.

8. A fan unit as claimed in Claim 1,
characterized in that
the two rotor cylinders (3a, 3b) have different axial dimensions, the electrically conductive cylinder preferably having a larger axial dimension than the magnetically conductive cylinder.

9. A fan unit as claimed in Claim 8,
characterized in that
the magnetically conductive cylinder (3a) is at least partly surrounded by the electrically conductive material.

10. A fan unit as claimed in Claim 2,
characterized in that
the set-point values are the primary frequency and the stator current or the stator voltage.

11. A fan unit as claimed in Claim 10,
characterized in that
the actual speed value is a measurement value or is derived from electrical parameters.

## Revendications

1. Unité de ventilation en vue de la production de courants de gaz, en particulier pour des aspirateurs, avec une roue à aubes (1) et un moteur (4),
caractérisée en ce que que le moteur est un moteur d'induction à flux radial avec un stator externe (2) et un rotor interne (3), le stator (2) se composant d'un paquet de tôles (2a) avec des bobines (2b) insérées dans des rainures et le rotor (3) se composant de deux cylindres (3a, 3b) concentriques d'une pièce dont le cylindre externe (3b) se compose d'un matériau conducteur électriquement et le cylindre interne (3a) se compose d'un matériau conducteur magnétiquement, au moins l'un des deux cylindres de rotor (3a, 3b) étant entièrement fermé à l'une de ses extrémités axiales (3c) et présentant à cette extrémité un contact plat avec la roue à aubes (1).

2. Unité de ventilation selon la revendication 1,
caractérisée en ce
que le moteur (4) est alimenté à l'aide d'un transformateur de fréquence (29 à 37) et le réglage de la vitesse de rotation est dérivé de valeurs de consigne dépendant du processus et de paramètres réglables.

3. Unité de ventilation selon la revendication 1,
caractérisée en ce
que le contact plat est formé entre le rotor du moteur (3) et la roue à aubes (1) par la plaque de base (1a) de la roue à aubes.

4. Unité de ventilation selon la revendication 1,
caractérisée en ce
que le matériau électriquement conducteur du cylindre externe du rotor (3b) est l'aluminium.

5. Unité de ventilation selon la revendication 1,
caractérisée en ce
que le matériau magnétiquement conducteur du cylindre interne du rotor (3a) est du fer massif.

6. Unité de ventilation selon la revendication 1,
caractérisée en ce
que le cylindre interne du rotor (3a) se compose de tôles disposées en couches axiales.

7. Unité de ventilation selon la revendication 1,
caractérisée en ce
le cylindre interne du rotor (3a) se compose d'une bande de tôle électrique enroulée.

8. Unité de ventilation selon la revendication 1,
caractérisée en ce
les deux cylindres du rotor (3a, 3b) présentent des longueurs axiales différentes, le cylindre électriquement conducteur présentant de préférence une longueur axiale plus élevée que le cylindre magnétiquement conducteur.

9. Unité de ventilation selon la revendication 8,
caractérisée en ce
que le cylindre magnétiquement conducteur (3a) est entouré, du moins en partie, d'un matériau électriquement conducteur.

10. Unité de ventilation selon la revendication 2,
caractérisée en ce
que les paramètres sont la fréquence primaire et le courant du stator ou la tension du stator.

11. Unité de ventilation selon la revendication 10,
caractérisée en ce
la valeur réelle de la vitesse de rotation est une grandeur de mesure ou est déterminée à partir de grandeurs électriques.
